Europäisches Patentamt

European Patent Office

Office européen des brevets

(19)

(11) Veröffentlichungsnummer: **0 492 133 A1**

# (12) EUROPÄISCHE PATENTANMELDUNG

(21) Anmeldenummer: **91119749.9**

(22) Anmeldetag: **19.11.91**

(51) Int. Cl.5: **F27D  17/00**, F27B 7/20, F27B 7/34

(30) Priorität: **21.12.90 DE 4041251**

(43) Veröffentlichungstag der Anmeldung:
**01.07.92 Patentblatt  92/27**

(84) Benannte Vertragsstaaten:
**AT DE ES FR GB IT SE**

(71) Anmelder: **KRUPP POLYSIUS AG
Graf-Galen-Strasse 17**
**W-4720 Beckum(DE)**

(72) Erfinder: **Holsiepe, Dietmar
Kirschweg 13
W-4722 Ennigerloh(DE)**

(74) Vertreter: **Tetzner, Volkmar, Dr.-Ing. Dr. jur.
Van-Gogh-Strasse 3
W-8000 München 71(DE)**

(54) Verfahren und Anlage zur Herstellung von gebranntem Gut sowie zur Erzeugung von elektrischer Energie.

(57) Die Erfindung betrifft ein Verfahren und eine Anlage zur Herstellung von gebranntem Gut sowie zur Erzeugung von elektrischer Energie, wobei das Gut unter Verwendung von minderwertigem Brennstoff in einem Drehrohrofen mittels heißer Ofengase gebrannt wird und zumindest ein Teil der in den Abgasen des Drehrohrofens enthaltenen Wärmemenge in elektrische Energie umgewandelt wird, wobei die Temperatur dieser Ofenabgase zwischen 700 und 1200°C, vorzugsweise zwischen 800 und 900°C, beträgt.

FIG.1

Die Erfindung betrifft ein Verfahren und eine Anlage zur Herstellung von gebranntem Gut sowie zur Erzeugung von elektrischer Energie entsprechend dem Oberbegriff des Anspruches 1 und dem Gattungsbegriff des Anspruches 6.

In der Zementindustrie ist man bestrebt, die beim Brennen von Gut in einem Drehrohrofen entstehenden heißen Ofengase sinnvoll zu nutzen. Die heißen Ofenabgase werden dabei insbesondere zur Trocknung und Vorwärmung des zu brennenden Gutes verwendet.

In der Praxis sind bereits Versuche unternommen worden, die Wärmemenge, die nach einem derartigen Trocknungs- bzw. Vorwärmprozeß noch in den Ofenabgasen verbleibt, zur Erzeugung von elektrischer Energie zu verwenden. Diese Wärmemenge ist jedoch im Normalfall so gering, daß eine Erzeugung von elektrischer Energie zu kostspielig und daher unwirtschaftlich ist.

Der Erfindung liegt demgemäß die Aufgabe zugrunde, ein Verfahren entsprechend dem Oberbegriff des Anspruches 1 sowie eine Anlage entsprechend dem Gattungsbegriff des Anspruches 5 dahin weiterzuentwickeln, daß die Herstellung von gebranntem Gut und die Erzeugung von elektrischer Energie auf wirtschaftliche Weise möglich werden.

Diese Aufgabe wird durch die kennzeichnenden Merkmale der Ansprüche 1 und 6 gelöst, indem zur Erzeugung der heißen Ofengase zumindest zu einem wesentlichen Teil minderwertiger Brennstoff eingesetzt wird und zur Erzeugung elektrischer Energie Ofenabgase Verwendung finden, deren Temperatur zwischen 700 und 1200°C, vorzugsweise zwischen 800 und 900°C beträgt.

Weitere Merkmale der Erfindung sind Gegenstand der Unteransprüche.

Besonders vorteilhaft ist das erfindungsgemäße Verfahren dann, wenn große Mengen von kostengünstigem Brennstoff minderer Qualität zur Verfügung stehen (möglichst von Brennstoff, der in der Nähe der Anlage abgebaut werden kann). Unter diesen Voraussetzungen läßt sich nach dem erfindungsgemäßen Verfahren aus den Ofenabgasen bis zur doppelten Menge derjenigen elektrischen Energie erzeugen, die für den Betrieb der ganzen Anlage benötigt wird. Auf diese Weise kann die durch die Erhöhung der Temperatur der Ofenabgase nach dem Vorwärmer (sofern das zu brennende Gut überhaupt durch die Ofenabgase vorgewärmt wird) auftretende Verringerung der Wirtschaftlichkeit der Herstellung des gebrannten Gutes zumindest wieder ausgeglichen werden.

Weitere Ausgestaltungen der Erfindung werden anhand der Beschreibung und der Zeichnung näher erläutert.

In der Zeichnung zeigen

Fig.1    eine Schemadarstellung einer erfindungsgemäßen Anlage,

Fig.2    eine schematische Darstellung einer zweiten Ausführungsform des Vorwärmers,

Fig.3    eine schematische Darstellung einer dritten Ausführungsform des Vorwärmers.

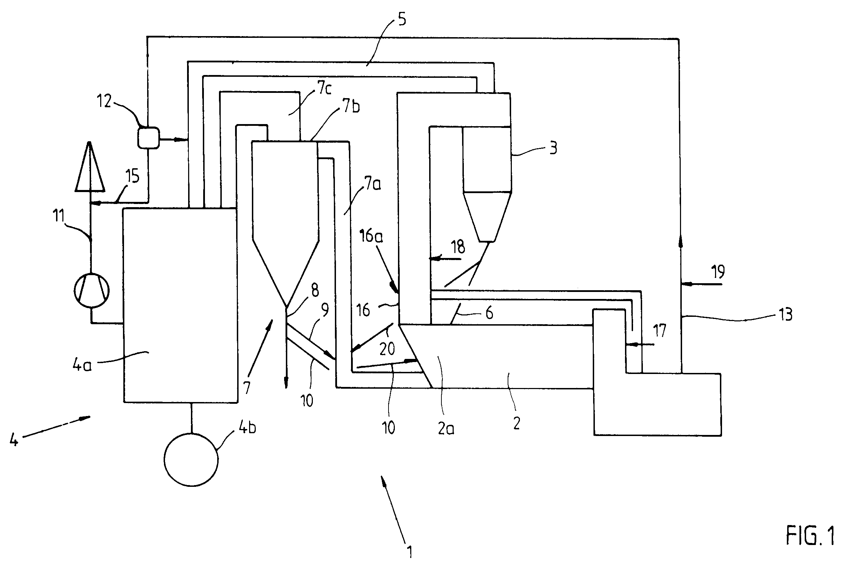

Die in Fig.1 veranschaulichte erfindungsgemäße Anlage 1 besteht im wesentlichen aus einem Drehrohrofen 2, einem dem Drehrohrofen vorgeschalteten und von den heißen Ofenabgasen durchströmten Vorwärmer 3 sowie eine Einrichtung 4 zur Erzeugung elektrischer Energie, die über eine Verbindung 5 an den Vorwärmer 3 angeschlossen ist.

Von dem als einstufiger Zyklonvorwärmer ausgebildeten Vorwärmer 3 führt eine Leitung 6 zum Einlaßbereich des Drehrohrofens 2.

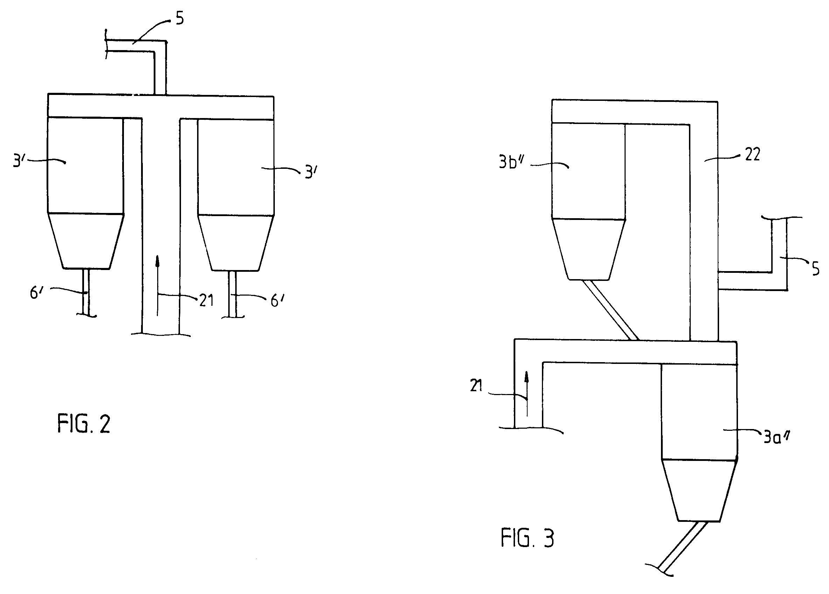

Im Rahmen der Erfindung ist es selbstverständlich auch möglich, statt eines einzelnen Zyklonvorwärmers 3 zwei oder mehr parallel geschaltete Zyklonvorwärmer 3' zu verwenden (vgl. Fig.2). In diesem Fall würden die durch den Pfeil 21 dargestellten heißen Ofenabgase auf beide Zyklonvorwärmer 3' aufgeteilt. Von beiden Zyklonvorwärmern 3' führen Leitungen 6' zum Einlaßbereich 2a des Drehrohrofens.

Die in Fig.3 dargestellte dritte Ausführungsform des Vorwärmers 3 ist ein zweistufiger Zyklonvorwärmer. Die heißen Ofenabgase (Pfeil 21) gelangen zunächst in den unteren Zyklon 3a'' und von dort in den oberen Zyklon 3b''.

Um nun zur Erzeugung der elektrischen Energie Ofenabgase mit einer Temperatur zwischen 700 und 1200°C, vorzugsweise zwischen 800 und 900°C, verwenden zu können, wird zumindest ein Teil der heißen Ofenabgase bereits nach dem unteren Zyklon 3a'' abgezweigt. Zu diesem Zweck mündet die Verbindung 5 von der Einrichtung 4 zur Erzeugung elektrischer Energie in eine den unteren Zyklon 3a'' mit dem oberen Zyklon 3b'' verbindende Leitung 22.

Selbstverständlich sind im Rahmen der Erfindung auch Vorwärmer denkbar, die eine noch größere Anzahl an Stufen aufweisen, sofern gewährleistet ist, daß der angegebene Temperaturbereich für die Ofenabgase zur Erzeugung der elektrischen Energie eingehalten wird.

Die Einrichtung 4 zur Erzeugung von elektrischer Energie wird im wesentlichen durch einen oder mehrere Boiler 4a und einen Generator 4b gebildet. Ferner ist zur Verbindung des Drehrohrofens 2 mit der Einrichtung 4 zur Erzeugung von elektrischer Energie ein Bypass 7 vorgesehen, der durch eine vom Einlaßbereich 2a des Drehrohrofens 2 abgehende und in den oberen Bereich eines Zyklon 7b mündende Leitung 7a und eine vom oberen Bereich des Zyklons 7b zum Boiler 4a führende Leitung 7c gebildet wird.

Vom unteren Bereich des Zyklons 7b geht eine Leitung 8 ab, von der einerseits eine Leitung 9 abzweigt, die in die Leitung 7a des Bypasses 7 mündet, und von der andererseits eine Leitung 10 abzweigt, die zum Einlaßbereich 2a des Drehrohrofens 2 führt.

Von dem Boiler 4a geht eine Saugzugleitung 11 zu einem nicht veranschaulichten Filter, beispielsweise einem Elektrofilter ab.

Nach dem Drehrohrofen 2 schließt sich ein Kühler an, der das gebrannte Gut mit Luft kühlt. Die dadurch erwärmte Luft wird über eine Leitung 13 abgeführt und kann beispielsweise bei einer Zuführung 14 in die Verbindung 5 und damit in die Einrichtung 4 zur Erzeugung von elektrischer Energie eingespeist werden. Eine zusätzliche Möglichkeit besteht darin, die Leitung 13 bei einer Zuführung 15 in die Saugzugleitung 11 münden zu lassen. Zu diesem Zweck ist in der Leitung 13 eine Verzweigungs- bzw. Umschaltvorrichtung 12 vorgesehen.

Oberhalb des Einlaßbereichs 2a des Drehrohrofens 2 ist ferner ein Calcinator 16 angeordnet, der eine Zuführung 16a aufweist, über die Rohmehl oder ein Gemisch aus Rohmehl und Brennstoff aufgegeben werden können.

Im wesentlichen wird der Brennstoff in den dem Einlaßbereich 2a gegenüberliegenden Bereich des Drehrohrofens 2 über eine Brennstoffzuführung 17 eingeführt. Weiterer Brennstoff kann im Bereich des Calcinators 16 über eine Brennstoffzuführung 18 und in die Leitung 13 über eine Brennstoffzuführung 19 eingebracht werden.

Im folgenden wird die Funktion der Anlage näher erläutert:
Die Abgase des Drehrohrofens 2 werden in den Vorwärmer 3 geleitet, wo sie mit dem zu brennenden Gut in Berührung kommen und dieses dadurch vorwärmen. Das vorgewärmte Gut gelangt dann über die Leitung 6 zum Einlaßbereich 2a des Drehrohrofens 2.

Die Ofenabgase weisen nach der Vorwärmung des zu brennenden Gutes eine Temperatur zwischen 700 und 1200 °C, vorzugsweise zwischen 800 und 900°C auf. Sie gelangen über die Verbindung 5 in den Boiler 4a, in dem Dampf erzeugt wird, der dann über eine nicht näher veranschaulichte Turbine und den Generator 4b zur Erzeugung von elektrischer Energie genutzt wird.

Über den Bypass 7 können die heißen Ofenabgase auch direkt - d.h. ohne Wärmeabgabe durch Vorwärmung des zu brennenden Gutes - zur Erzeugung von elektrischer Energie verwendet werden.

Von der vom Vorwärmer 3 abgehenden Leitung 6 zweigt eine Leitung 20 ab, über die ein Teil oder die gesamte Menge des vorgewärmten Gutes abgeleitet und in die Leitung 7a des Bypasses 7 eingeführt werden kann. Der Bypass 7 bietet somit zusätzlich die Möglichkeit, das im Vorwärmer 3 bis auf etwa 800 bis 900 °C vorgewärmte Gut nochmals direkt mit den wesentlich heißeren Ofenabgasen (1100 bis 1200 °C) wärmezubehandeln. Das Gut wird über die Leitung 7a in den Zyklon 7b geführt, von wo aus es über die Leitungen 8 und 10 zum Einlaßbereich 2a des Drehrohrofens 2 gelangt.

Schließlich kann der Bypass 7 dazu benutzt werden, die bei Bedarf unerwünschten Schadstoffe im Drehrohrofen 2 zu eliminieren. Das in diesem Fall teilweise mitabgeschiedene feinkörnige Gut wird in der Leitung 7a, dem Zyklon 7b und den Leitungen 8 und 9 so lange zirkuliert, bis es in ausreichender Weise angereichert ist und dann über die Leitung 8 aus der Anlage entfernt werden kann.

Nach der Calcinierung wird das vorgewärmte Gut im Drehrohrofen 2 fertiggebrannt und anschließend im Kühler mit Luft gekühlt.

Die sich bei dieser Kühlung erwärmende Luft wird über die Leitung 13 entweder über die Zuführung 14 in die Verbindung 5 und damit in die Einrichtung 4 zur Erzeugung von elektrischer Energie oder über die Zuführung 15 in die Saugzugleitung 11 eingeführt. Die Brennstoffzuführung 19 in der Leitung 13 ermöglicht eine gegebenenfalls erforderliche weitere Erhitzung dieser Luft.

Über die Saugzugleitung 11 werden die durch den Boiler 4a stark abgekühlten Ofenabgase einem nicht näher veranschaulichten Filter zur Abtrennung noch enthaltener Feststoffpartikel zugeführt. Eine unter Umständen vor der Filterung notwendige Ausnutzung der Wärme zur Rohmaterialtrocknung kann mit den Abgasen aus dem Boiler 4a sowie der durch den Kühler erwärmten und über die Zuführung 15 eingeführten Luft erfolgen.

Die einen thermischen Verbund bildende Anlage ist am besten für den Fall geeignet, bei dem in der Nähe der Anlage eine große Menge an kostengünstigem Brennstoff vorhanden ist. Hierbei ist es möglich, einen Brennstoff minderer Qualität zu verwenden, der bei einer herkömmlichen Anlage, die nur zur Herstellung von gebranntem Gut ausgelegt ist, einen wirtschaftlichen Ofenbetrieb nicht mehr gewährleisten würde. Die sich durch den niedrigeren Heizwert einstellende längere Verweilzeit des zu brennenden Gutes im Drehrohrofen und die dadurch bedingte Herabsetzung des spezifischen Durchsatzes wird durch die gleichzeitige Herstellung von elektrischer Energie ausgeglichen.

Besonders interessant ist die nach dem erfindungsgemäßen Verfahren arbeitende Anlage dann, wenn einerseits der Brennstoffpreis sehr gering und andererseits der Strompreis sehr hoch ist. In einem solchen Fall kann die Anlage im wesentlichen zur Stromerzeugung verwendet werden, indem die gesamten Abgase aus dem Drehrohrofen - mit hoher Temperatur - über den Bypass 7 direkt zur Einrichtung 4 zur Erzeugung elektrischer Energie geleitet werden. Dabei nimmt man den höheren spezifischen Wärmeaufwand zur Erzeugung von gebranntem Gut in Kauf, weil mit den großen Mengen an hochtemperierten Abgasen aus dem Drehrohrofen ein guter Ausnutzungsgrad in der Einrichtung 4 zur Erzeugung elektrischer Energie erreicht wird.

Gerade die Kombination der Verwendung von minderwertigem Brennstoff zur Erzeugung der heißen Ofengase und der Verwendung der Ofengase im angegebenen Temperaturbereich (zwischen 700 und 1200°C) zur Erzeugung der elektrischen Energie ermöglichen ein wirtschaftliches Betreiben der Anlage. Es kommen daher insbesondere Brennstoffe in Frage, die einen Heizwert zwischen 300 und 4000 kcal/kg aufweisen.

Im Rahmen der Erfindung ist es selbstverständlich auch möglich, die Anlage derart zu fahren, daß im Falle eines großen Bedarfs an gebranntem Gut qualitativ höherwertiger Brennstoff eingesetzt wird, während ansonsten qualitativ minderwertiger Brennstoff zum Einsatz kommt.

**Patentansprüche**

1. Verfahren zur Herstellung von gebranntem Gut, insbesondere zur Herstellung von Zementklinker, sowie zur Erzeugung von elektrischer Energie, bei dem das Gut unter Einsatz von Brennstoff in einem Drehrohrofen mittels heißer Ofengase gebrannt wird und zumindest ein Teil der in den Abgasen des Drehrohrofens enthaltenen Wärmemenge in elektrische Energie umgewandelt wird,

   gekennzeichnet durch die Kombination folgender Merkmale:
   a) zur Erzeugung der heißen Ofengase wird zumindest zu einem wesentlichen Teil minderwertiger Brennstoff eingesetzt,
   b) zur Erzeugung elektrischer Energie finden Ofenabgase Verwendung, deren Temperatur zwischen 700 und 1200°C, vorzugsweise zwischen 800 und 900°C, beträgt.

2. Verfahren nach Anspruch 1, dadurch gekennzeichnet, daß ein minderwertiger Brennstoff mit einem Heizwert zwischen 300 und 4000 kcal/kg verwendet wird.

3. Verfahren nach Anspruch 1, dadurch gekennzeichnet, daß zumindest ein Teil der heißen Ofenabgase, bevor er zur Erzeugung elektrischer Energie verwendet wird, das zu brennende Gut zumindest teilweise vorwärmt.

4. Verfahren nach Anspruch 1, dadurch gekennzeichnet, daß die heißen Ofenabgase ohne Vorwärmung des zu brennenden Gutes zur Erzeugung von elektrischer Energie verwendet werden.

5. Verfahren nach Anspruch 1, wobei das Gut nach dem Brennen im Drehrohrofen mittels Luft gekühlt wird, dadurch gekennzeichnet, daß die dadurch erwärmte Luft zumindest teilweise zur Erzeugung elektrischer Energie verwendet wird.

6. Anlage zur Herstellung von gebranntem Gut, insbesondere zur Herstellung von Zementklinker, sowie zur Erzeugung von elektrischer Energie, enthaltend
   a) einen unter Verwendung von Brennstoff betriebenen Drehrohrofen (2) zum Brennen des Gutes mittels heißer Ofengase,
   b) eine Einrichtung (4) zur Erzeugung von elektrischer Energie,
   c) sowie eine Verbindung (5, Bypass 7) zum Transport wenigstens eines Teiles der Abgase des Drehrohrofens zur Einrichtung (4) zur Erzeugung elektrischer Energie,

   gekennzeichnet durch die Kombination
   d) eines mit minderwertigem Brennstoff betriebenen Drehrohrofens (2),
   e) mit einer Einrichtung (4) zur Erzeugung von elektrischer Energie aus den Abgasen des Drehrohrofens, deren Temperatur zwischen 700 und 1200°C, vorzugsweise zwischen 800 und 900°C, beträgt.

7. Anlage nach Anspruch 6, gekennzeichnet durch einen Vorwärmer (3), der zumindest einen Teil der zur Erzeugung der elektrischen Energie vorgesehenen heißen Ofenabgase auf eine Temperatur zwischen 700 und 1200°C, vorzugsweise zwischen 800 und 900°C, abkühlt.

8. Anlage nach Anspruch 6, dadurch gekennzeichnet, daß ein den Drehrohrofen (2) mit der Einrichtung (4) zur Erzeugung von elektrischer Energie verbindender Bypass (7) zum Transport der heißen Ofengase vorgesehen ist.

9. Anlage nach Anspruch 6, dadurch gekennzeichnet, daß zur Erzeugung der heißen Ofengase im wesentlichen ein Brennstoff mit einem Heizwert zwischen 300 und 4000 kcal/kg vorgesehen ist.

10. Anlage nach Anspruch 6 mit einem dem Drehrohrofen nachgeschalteten, das gebrannte Gut mit Luft durchströmenden Kühler, dadurch gekennzeichnet, daß eine Leitung (13) vorgesehen ist, welche die durch das gebrannte Gut erwärmte Luft zur Einrichtung (4) zur Erzeugung von elektrischer Energie transportiert.

FIG. 1

FIG. 2

FIG. 3

EP 0 492 133 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| --- | --- | --- | --- |
| X | EP-A-0 143 395 (KLÖCKNER-HUMBOLDT-DEUTZ) * Seite 4, Zeile 34 – Seite 5, Zeile 15 * | 1,2,4,5 | F27D17/00 F27B7/20 |
| A | * Ansprüche 1-16; Abbildungen * --- | 6,7,8,10 | F27B7/34 |
| X | EP-A-0 045 811 (SUMITOMO SEMENTO K K) * Ansprüche 1-11; Abbildungen * --- | 1,2,3,5, 6,7,9,10 | |
| A | PATENT ABSTRACTS OF JAPAN vol. 14, no. 256 (M-980)4. Juni 1990 & JP-A-02 071 004 ( SUMITOMO CEMENT CO ) 6. Januar 1989 * Zusammenfassung * --- | 1,2,3,5, 10 | |
| A | DE-A-3 533 775 (W.GRIGEL) --- | 1 | |
| A | ZKG INTERNATIONAL Bd. 42, Nr. 10, 1. Oktober 1989, WIESBADEN Seiten 497 – 501; H.D.MAURY: 'BRENNSTOFF AUS MÜLL' ----- | 1 | |
| | | | RECHERCHIERTE SACHGEBIETE (Int. Cl.5) |
| | | | F27D F27B |

Der vorliegende Recherchenbericht wurde für alle Patentansprüche erstellt

| Recherchenort | Abschlußdatum der Recherche | Prüfer |
| --- | --- | --- |
| DEN HAAG | 10 APRIL 1992 | |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

......................................................................
& : Mitglied der gleichen Patentfamilie, übereinstimmendes Dokument